# EUROPEAN PATENT SPECIFICATION

(11) **EP 4 285 308 B1**
(45) Date of publication and mention of the grant of the patent: **26.06.2024**
(21) Application number: 22705721.3
(22) Date of filing: 28.01.2022
(51) Int. Cl.: H04L 9/40, G06Q 20/38, G06Q 20/40

(54) **SECURELY REGISTERING A SEQUENCE OF TRANSACTIONS**
SICHERE REGISTRIERUNG EINER ABFOLGE VON TRANSAKTIONEN
ENREGISTREMENT SÉCURISÉ D'UNE SÉQUENCE DE TRANSACTIONS

(30) Priority: 29.01.2021 EP 21154250
(43) Date of publication of application: 06.12.2023
(73) Proprietor: fiskaly gmbh, 1150 Wien (AT)
(72) Inventor: GAUBATZ, Patrick, 1050 Wien (AT); KAINEDER, Christoph, 1190 Wien (AT); ARMSTER, Christoph, 2620 Neunkirchen (AT)
(74) Representative: SONN Patentanwälte GmbH & Co KG
(86) International application number: PCT/EP2022/052092
(87) International publication number: WO 2022/162169

(56) References cited:
- US-A1- 2011 197 283
- US-A1- 2015 100 497

## Description

The present invention concerns the secure registration of a sequence of transactions with a distributed system, wherein the distributed system comprises a registration device and a signature device, wherein the registration device comprises a transaction storage for storing signed transaction records signed by the signature device, wherein the signature device comprises a key usage counter that is incremented with each signature generated by the signature device, wherein each signed transaction record comprises an associated value of the key usage counter at the time of the signature. In particular, the present invention concerns a method for securely registering a sequence of transactions with such a distributed system, the distributed system itself, computer programs for configuring the registration device and the signature device, computer-readable media carrying such computer programs, and the use of the above in a distributed electronic recordkeeping system, wherein the registration device is part of an electronic point-of-sale terminal, e.g. a register, for the generation of new unsigned transaction records, wherein the signature device is a remote device and forms part of a remote signature service, to which the registration device is connected via a data network. The electronic point-of-sale terminal may optionally have a user interface for entering transaction data.

Systems such as those defined in the outset have the purpose to prevent later tampering and manipulation of the registered sequence of transactions. In particular they shall provide integrity, authenticity and completeness of those transactions. Integrity and authenticity are provided by a digital signature generated by a trusted party, for example a signature device under the control of an officially certified service provider, for each transaction. There are different possibilities to provide completeness. One that is particularly easy to understand and verify is using a key usage counter, which increments (increases by one) with each provided digital signature, and including the present value of this counter in the signed transaction record. Consequently, each and every record on the sequence has a unique number associated to it, that is the associated value of the key usage counter at the time of the signature. For any given sequence to be complete, the number of transactions must correspond to one plus the difference between the highest associated value (upper boundary) and the lowest associated value (lower boundary) of transactions within the sequence. For every possible value starting with the lower boundary up to and including the upper boundary there must be exactly one transaction with a matching associated value. The possible values are generated by starting with the lower boundary in incrementing by one until the upper boundary is reached. This allows an efficient proof for completeness, but is in particular easier and faster to verify than for a linked list or a hash-linked blockchain.

EP 3 716 237 A1 discloses a transaction registration device having a network interface, set up to connect the transaction registration device to a plurality of point-of-sale terminals by means of a communication network, a plurality of technical security devices, each of which has a digital interface, a security module and a memory and is set up for registering transactions and a control device which is set up to receive messages relating to transactions from the point-of-sale terminals via the network interface and to assign them to the technical security devices for registration. In this context, a signature counter is disclosed that is a continuous counter defined by the security module of a technical security device. The signature counter is incremented each time a signature is generated.

One problem encountered with known methods and systems of the type identified in the outset is that they are not prepared to handle failures unavoidable in distributed systems, such as loss of a signature due to connection loss between the registration device and the signature device or due to storage failure at the registration device (e.g., a power outage causing network failure or file system corruption upon unexpected termination).

It is an object of the present invention to provide a method and distributed system to overcome or at least alleviate the disadvantages of the prior art mentioned above.

The invention proposes a method as defined in the outset, wherein the method comprises: comparing a present value of the key usage counter (or "signature counter") with a last recorded value, which last recorded value is the associated value of a last signed transaction record in the transaction storage, loading at least one previously signed transaction record from a record buffer of the signature device responsive to detecting a gap between the present value and the last recorded value, and transmitting the loaded at least one previously signed transaction record to the registration device. The detection of the gap can be performed either at the registration device or at the signature device, as will be explained in more detail below. The signature device keeping one or more signed transaction records in the record buffer allows for the registration device to retrieve lost signatures or lost signed transactions from the signature device, thereby closing what would otherwise be gaps in the registered sequence of transactions. The record buffer of the signature device can be a single element storage, appropriate for storing a single most recently signed transaction record, or a queue (a first-in-first-out data structure), e.g., having fixed size, in particular a fixed-size circular buffer. The present disclosure allows the registration device to recover from transmission errors or storage errors that lead to a loss of a signature and thus to a loss of a signed transaction record. It enables the registration device to provide a valid proof of completeness of its records even after such error conditions. The recovery of signed transaction records or at least signatures thereof is triggered by a desynchronization of the key usage counter and the transaction storage, which results in a detectable gap.

Correspondingly, the present invention proposes a distributed system as defined in the outset, wherein the signature device is configured to load at least one previously signed transaction record from the record buffer responsive to a detection of a gap between a present value of the key usage counter and the associated value of a last signed transaction record in the transaction storage, and for transmitting the loaded at least one previously signed transaction record to the registration device.

The present disclosure relates to a distributed system, which means that the registration device and the signature device are different devices. The signature device can be remote from the registration device and they can be connected via a data network, for example. In one embodiment, the signature device can be part of a signature service, which can be implemented on a cloud infrastructure.

Optionally, the registration device sends an indication of the last recorded value to the signature device and the signature device compares the present value with the received indication. Depending on the nature and implementation of the indication, the comparison allows the signature device to detect whether there is a gap between the present value of the key usage counter and the last recorded value thereof.

For example, the indication of the last recorded value may be an expected next value of the key usage counter, which is obtained by incrementing the last recorded value, wherein the signature device compares the expected next value with the present value and detects a gap by evaluating equality of the compared values. In this case, the signature device detects a gap if the expected next value is smaller than the present value.

Correspondingly, the registration device of the disclosed distributed system may be configured to send an indication of the associated value of a last signed transaction record (e.g., an expected next value) to the signature device.

The registration device may send the indication of the last recorded value or specifically the expected next value together with every new data to be signed (DTBS), which can be a new unsigned transaction record. In this way the additional data traffic caused by the present method under normal, error-free circumstances is minimal and limited to the size of a value of the key usage counter.

According to a further optional embodiment, the signature device may reject providing a signature of a new unsigned transaction record responsive to detecting a gap between the present value and the last recorded value. Correspondingly, the signature device of the disclosed distributed system may be configured to reject providing a signature of a new unsigned transaction record responsive to detecting a gap between the present value and the associated value of the last signed transaction record. By rejecting to provide new signatures, the signature device can effectively enforce that the registration device always maintains a complete sequence of transactions and recovers any loss of transaction records at the earliest possible moment.

In an alternative embodiment, the registration device may, upon receipt of a new signed transaction record from the signature device, compare the associated value of the new signed transaction record with the incremented last recorded value and requests a retransmission of at least one previously signed transaction record from the signature device responsive to detecting a gap between the compared values. In this case, the record buffer of the signature device keeps at least two of the most recently signed transaction records. No modification of the communication protocol between the registration device and the signature device is required to support normal, error-free operation. Support for recovery of lost previously signed transaction records can be introduced into the interface as a separate message type.

Correspondingly, the registration device of the disclosed distributed system may be configured to, upon receipt of a new signed transaction record from the signature device, compare the associated value of the new signed transaction record with the associated value of the last signed transaction record and to send a request for retransmission of at least one previously signed transaction record from the signature device responsive to a detection of a gap between the compared values.

Further, the invention proposes computer programs for configuring the registration device and the signature device as defined in the outset. The computer program for configuring the registration device comprises instructions to cause a registration device comprising a transaction storage for storing signed transaction records, wherein each signed transaction record comprises an associated value of a key usage counter at the time of the signature, to execute the steps of: accessing the transaction storage and determining the associated value of the last signed transaction record in the transaction storage as the last recorded value of the key usage counter, sending an indication of said last recorded value to a signature device (optionally together with a new unsigned transaction record), receiving from the signature device at least one previously signed transaction record, and storing the received at least one previously signed transaction record in the transaction storage. And the computer program for configuring the signature device comprises instructions to cause a signature device comprising a key usage counter, which key usage counter is incremented with each signature generated by the signature device, and a record buffer for buffering at least one previously signed transaction record, wherein each signed transaction record comprises an associated value of a key usage counter at the time of the signature, to execute the steps of: receiving an indication of a last recorded value of the key usage counter from a registration device, loading at least one previously signed transaction record from the record buffer responsive to detecting a gap between a present value of the key usage counter and the received last recorded value, and transmitting the loaded at least one previously signed transaction record to the registration device. Correspondingly, the scope of the present invention extends to a computer-readable medium for each of these computer programs respectively having stored thereon each.

Finally, the invention proposes a use of the method according to any of the variations described above in a distributed electronic recordkeeping system, wherein the registration device is part of an electronic point-of-sale terminal (optionally having a user interface for entering transaction data) for the generation of new unsigned transaction records, wherein the signature device is a remote device and forms part of a remote signature service, to which the registration device is connected via a data network. Specifically, within the scope of the present disclosure, the distributed system can be a technical security device (German: "technische Sicherheitseinrichtung" or "TSE") for protecting an electronic recording system against manipulation, wherein the registration device (German: "Aufzeichnungssystem") may be implemented by a Security Module Application (or SMA) and the signature device may be implemented by a Cryptographic Service Provider (or CSP). The CSP may be implemented for example by a CSPL.

The invention is further explained below with reference to particularly preferred examples of embodiments and with reference to the drawings. However, the invention is not intended to be limited to these embodiments.
Fig. 1 schematically shows a typical implementation of the distributed system in a cash register.
Fig. 2 schematically illustrates a possible error in communication within a distributed system.
Fig. 3 schematically illustrates another possible error in the communication within a distributed system.
Fig. 4 schematically illustrates a sequence diagram of the distributed system for securely registering a sequence of transactions.

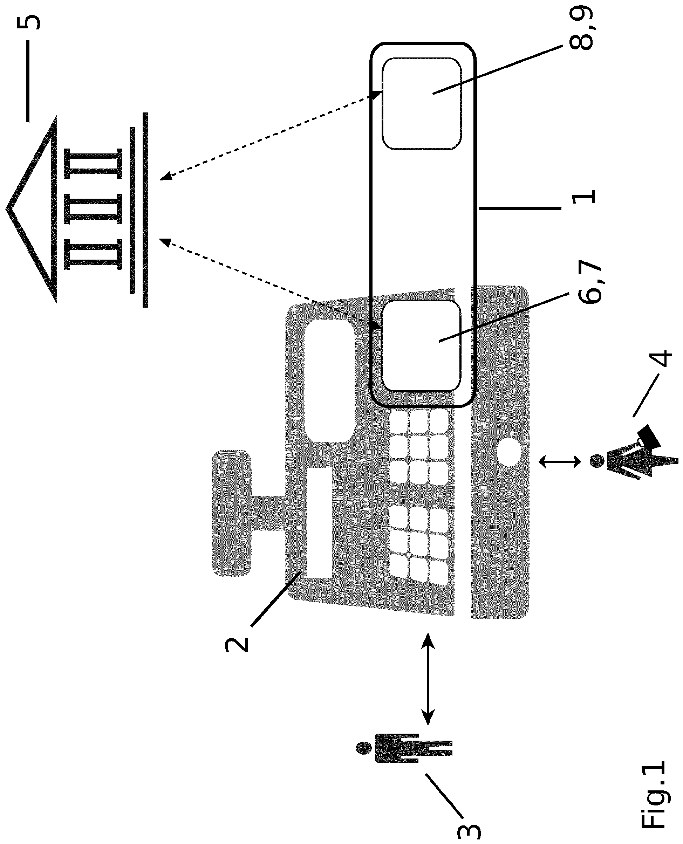

Figure 1 shows a typical scenario where the distributed system 1 for securely registering a sequence of transactions is used. The central object within a payment process in stationary retail is the electronic point-of-sale terminal, which can be a register 2. The register 2 can be for example a stationary cash register or a mobile register with or without the possibility to store cash. A register 2 is in general a system to register business operations and transactions. The cash register serves multiple purposes for the cashier 3, the client 4, as well as for a potential official financial audit, for example by a tax office 5. The latter aspect is becoming more and more pronounced in order to address tax fraud. Therefore, the implementation of a TSE (German: "Technische Sicherheitseinrichtung") is mandatory for retailers in Germany since 2020, according to German law "Gesetz zum Schutz vor Manipulationen an digitalen Grundaufzeichnungen". The TSE is intended to protect against manipulation and tampering of companies' digital records of business operations such as cash, EC card and credit card transaction, vouchers, cancellation of a transaction, tips, deposit of change, payment of wages from the register and/or money transit. Each business operation consists of at least one transaction. The protection is based on the integrity, the authenticity, and the completeness of the records. The records must be provided in a machine-readable format. The data to be stored concerning a transaction also includes the starting date and time, the end date and time and each change of a business operation. Also, a uniquely assignable and continuously increasing transaction counter has to be provided for each transaction. A test value is to be generated once the process is being finished. The TSE itself consists of two main parts, namely a registration device 6, e.g. a Security Mobile Application (SMA) 7, and a signature device 8, e.g. a Cryptographic Service Provider (CSP) 9. The register 2 serves as a gate keeper and decides which data is stored and who is allowed access to the data. The SMA 7 has the task of ensuring that nothing can go wrong during the security process and that nothing can be tampered with during the communication process. The signature device 8 provides a digital signature for the unsigned transaction records 10. The registration device 6 and the signature device 8 can be implemented locally, e.g. in the register 2, or they can be operated remotely, e.g. on an external server or in a cloud infrastructure, and are connected via a data network to the register 2. In another embodiment the registration device 6 can be implemented locally, e.g. in the register 2, and the signature device 8 can be operated remotely on an external server or in a cloud. The invention provides a method and a distributed system 1 for securely registering a sequence of transactions in the sense of the above-described TSE.

During a transaction, e.g. a payment of a customer, data to be signed (DTBS) 11 concerning the transaction, which can be a new unsigned transaction record 10, is sent from the registration device 6 to the signature device 8. The signature device 8 then proceeds with a signature creation 12 of a digital signature of the transaction to confirm the authenticity of the data. Furthermore, a key usage counter is incremented in an incrementation 13 by the signature device 8. The signature device 8 then sends at least the signature to the registration device 6. The registration device merges the signature with the data to be signed (DTBS) 11, which can be new unsigned transaction data 10, and the present value of the key usage counter to form signed data (SD) 14, which can be a signed transaction record 15, which is then stored in a transaction storage 16 connected to the registration device 6. Alternatively, the signature device 8 attaches the signature to the unsigned transaction record 10 with the present value of the key usage counter and sends the resulting signed transaction record 15 to the registration device 6. Either way, the registration device 6 stores the signed transaction record 15 in the transaction storage 16. The client 4 then receives a receipt for the transaction. The receipt contains data for the validation of the transaction in case of an official financial audit. The stored data serves a as basis for an official financial audit.

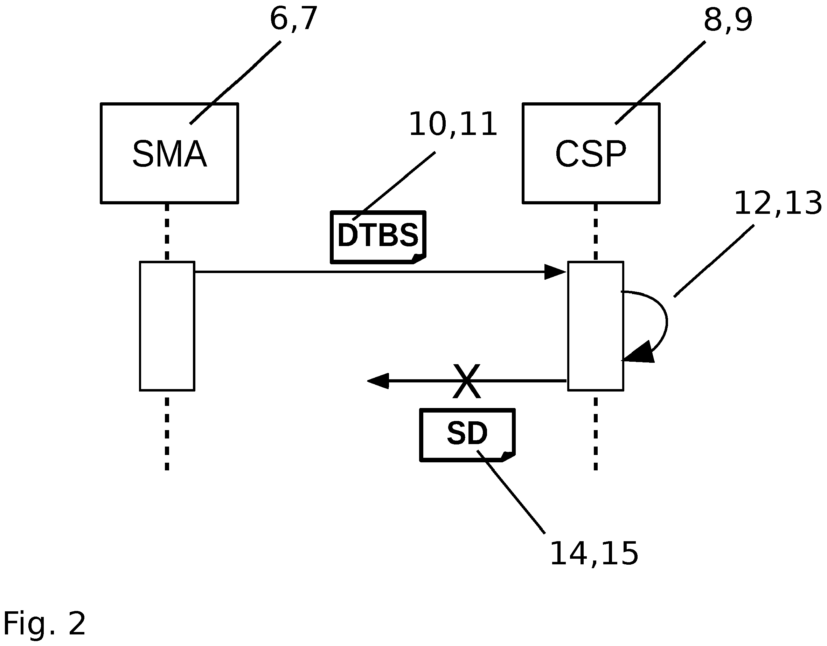

Figure 2 shows that a registration device 6 sends an unsigned transaction record 10 to the signature device 8 in order to obtain a signature. The signature device 8 proceeds with a signature creation 12 and an incrementation 13 of the key usage counter. During the transmission of the signed transaction record 15, an error occurs leading to the loss of the signed transaction record 15. The error can be, for example, a communication error or a network fault. The registration device 6 is unable to receive the signed transaction record 15. In consequence, the signed transaction record 15 is lost and the signature sequence has a gap, leading to incomplete and invalid data.

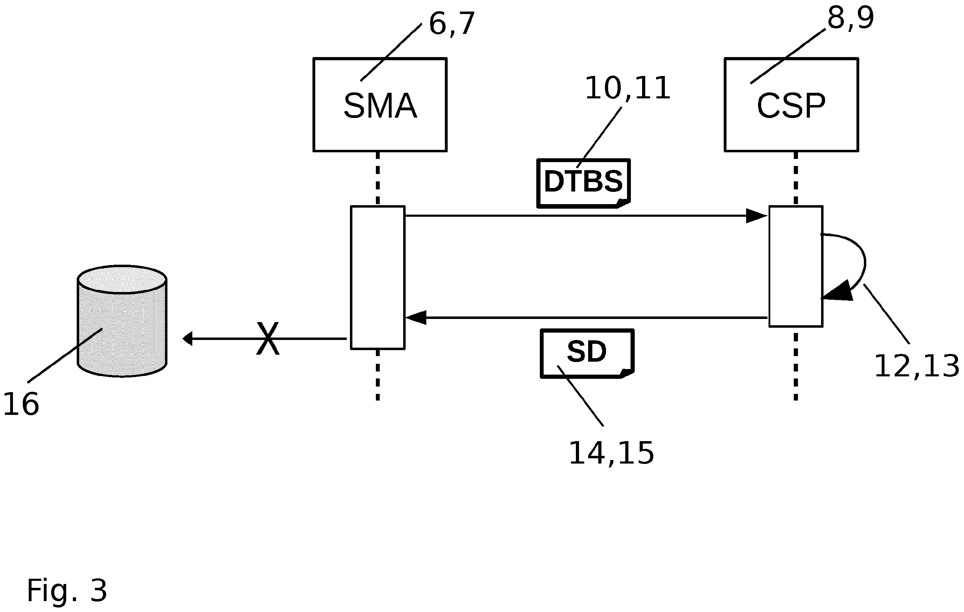

Similar to figure 2, figure 3 shows another typical error that might occur during a transaction process. The registration device 6 sends an unsigned transaction record 10 to the signature device 8. The signature device 8 is able to create the signature, increments the key usage counter, and sends the signed transaction record 15 to the registration device 6. The registration device 6 receives the signed transaction record 15 but fails to store the signed transaction record 15 in the designated transaction storage 16. In consequence, the signed transaction record 15 is lost and the key usage counter has a gap, leading to incomplete and invalid data.

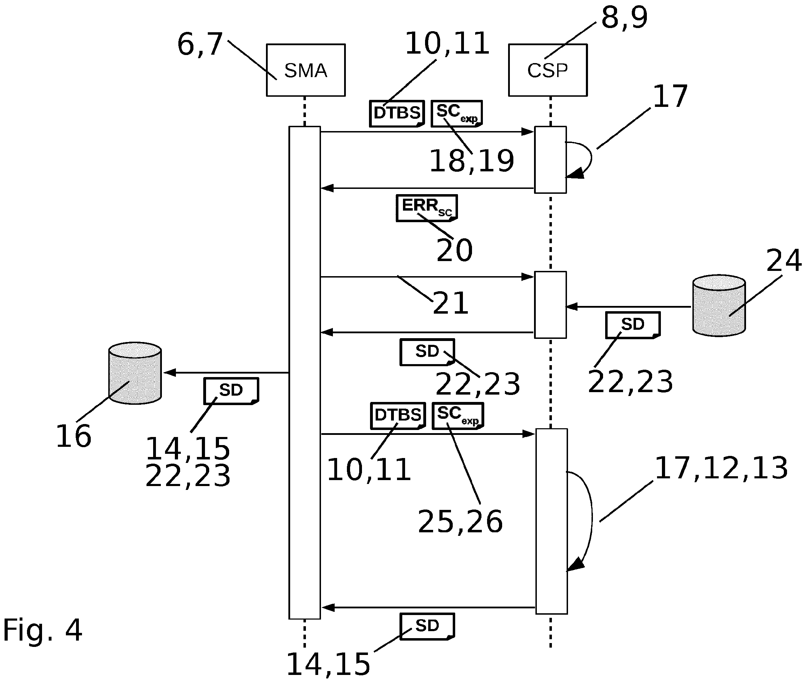

Figure 4 shows a preferred embodiment of the invention, which prevents (or allows the recovery from) the loss of transaction records and resulting gaps in the key usage counter as shown in figure 2 and figure 3, by applying a precondition check 17 before performing any signature creation 12 and incrementation 13 of the key usage counter by the signature device 8. According to figure 2 or figure 3, it is assumed that the latest signed transaction record 15 of the signature device 8 is lost. The registration device 6 not only sends the unsigned transaction record 10 to the signature device 8 but also an indication 18 of a last recorded value of the key usage counter, which can be an expected next value 19 of the key usage counter. The expected next value 19 of the key usage counter is obtained by incrementing the last recorded value of the key usage counter in the transaction storage 16. The last recorded value in the transaction storage 16 is the associated value of the last signed transaction record in the transaction storage 16. The signature device 8 performs a precondition check 17 by comparing the expected next value 19 with the present value of the key usage counter, and detects a gap by evaluating equality of the compared values. The signature device 8 rejects providing a new signed transaction record 15 due to the detected mismatch of the value of the key usage counter and the expected next value 19 of the key usage counter. An error regarding the signature counter (ERR_{SC}) 20 is reported back to the registration device 6 by the signature device 8 regarding the negative outcome of the precondition check 17. The registration device 6 then sends a request 21 for sending the (missing) previously signed data 22, which can be a (missing) previously signed transaction record 23, to the signature device 8. The registration device 6 is then retrieving the previously signed transaction record 23 from the signature device 8, which the signature device 8 stores in a record buffer 24. The record buffer 24 can be a single element or a queue, e.g. a first-in-first-out data structure of fixed size or a circular buffer. Once the missing previously signed transaction record 23 is retrieved, the registration device 6 has recovered the missing previously signed transaction record 23 with the latest value of the key usage counter. Alternatively, the registration device 6 can compare the expected next value 19 of the key usage counter to the associated value of a new signed transaction record 15. In case of a mismatch, the registration device 6 sends a request 21 for retransmission of at least one previously signed transaction record 23, that is stored in the record buffer 24 of the signature device 8.

Once the missing transaction records are retrieved and stored in the transaction storage 16 of the registration device 6, the registration device 6 proceeds to retry the previously failed signature creation attempt by sending the previously sent unsigned transaction record 10 and the updated indication 25 of the last recorded value of the key usage counter, which can be an updated expected next value 26 of the key usage counter, which is derived from the recovered last signed transaction record, to the signature device 8. The precondition check 17 concerning the equality of the updated expected next value 26 of the key usage counter and the value of the key usage counter is met due to the recovery of the missing transaction record. The signature device 8 proceeds with the signature creation 12 and the incrementation 13 of the key usage counter. The signed transaction record 15 is returned to the registration device 6 and stored in the transaction storage 16 of the registration device 6.

## Claims

1. A method for securely registering a sequence of transactions with a distributed system (1),
wherein the distributed system (1) comprises a registration device (6) and a signature device (8),
wherein the registration device (6) comprises a transaction storage (16) for storing signed transaction records (15) signed by the signature device (8),
wherein the signature device (8) comprises a key usage counter that is incremented with each signature generated by the signature device (8),
wherein each signed transaction record (15) comprises an associated value of the key usage counter at the time of the signature,
wherein the method comprises:
comparing a present value of the key usage counter with a last recorded value, which last recorded value is the associated value of a last signed transaction record in the transaction storage (16),
loading at least one previously signed transaction record (23) from a record buffer (24) of the signature device (8) responsive to detecting a gap between the present value and the last recorded value, and
transmitting the loaded at least one previously signed transaction record (23) to the registration device (6).

2. The method of claim 1, **characterized in that** the registration device (6) sends an indication (18) of the last recorded value to the signature device (8) and the signature device (8) compares the present value with the received indication (18).

3. The method of claim 2, **characterised in that** the indication (18) of the last recorded value is an expected next value (19) of the key usage counter, which is obtained by incrementing the last recorded value, wherein the signature device (8) compares the expected next value (19) with the present value and detects a gap by evaluating equality of the compared values.

4. The method of claim 2 or 3, **characterised in that** the signature device (8) rejects providing a signature of a new unsigned transaction record (10) responsive to detecting a gap between the present value and the last recorded value.

5. The method of claim 1, **characterized in that** the registration device (6) upon receipt of a new signed transaction record (15) from the signature device (8) compares the associated value of the new signed transaction record (15) with the incremented last recorded value and requests a retransmission of at least one previously signed transaction record (23) from the signature device (8) responsive to detecting a gap between the compared values.

6. A distributed system (1) for securely registering a sequence of transactions,
wherein the distributed system (1) comprises a registration device (6) and a signature device (8),
wherein the registration device (6) comprises a transaction storage (16) for storing signed transaction records (15) signed by the signature device (8),
wherein the signature device (8) comprises a key usage counter and a record buffer (24) for buffering signed transaction records (15),
wherein each signed transaction record (15) comprises an associated value of the key usage counter at the time of the signature,
wherein the signature device (8) is configured to load at least one previously signed transaction record (23) from the record buffer (24) responsive to a detection of a gap between a present value of the key usage counter and the associated value of a last signed transaction record in the transaction storage (16), and for transmitting the loaded at least one previously signed transaction record (23) to the registration device (6).

7. The distributed system (1) of claim 6, **characterised in that** the registration device (6) is configured to send an indication (18) of the associated value of a last signed transaction record to the signature device (8).

8. The distributed system of claim 7, **characterised in that** the signature device (8) is configured to reject providing a signature of a new unsigned transaction record (10) responsive to detecting a gap between the present value and the associated value of the last signed transaction record.

9. The distributed system of claim 6, **characterised in that** the registration device (6) is configured to, upon receipt of a new signed transaction record (15) from the signature device (8), compare the associated value of the new signed transaction record (15) with the associated value of the last signed transaction record and to request a retransmission of at least one previously signed transaction record (23) from the signature device (8) responsive to a detection of a gap between the compared values.

10. A computer program comprising instructions to cause a registration device (6) comprising a transaction storage (16) for storing signed transaction records (15), wherein each signed transaction record (15) comprises an associated value of a key usage counter at the time of the signature, to execute the steps of:
accessing the transaction storage (16) and determining the associated value of the last signed transaction record in the transaction storage (16) as the last recorded value of the key usage counter,
sending an indication (18) of said last recorded value to a signature device (8),
receiving from the signature device (8) at least one previously signed transaction record (23), wherein the at least one previously signed transaction record (23) is loaded by the signature device (8) from a record buffer responsive to detecting a gap between a present value of the key usage counter and the received last recorded value; and
storing the received at least one previously signed transaction record (23) in the transaction storage (16).

11. A computer-readable medium having stored thereon the computer program of claim 10.

12. A computer program comprising instructions to cause a signature device (8) comprising a key usage counter, which key usage counter is incremented with each signature generated by the signature device (8), and a record buffer (24) for buffering at least one previously signed transaction record (23), wherein each signed transaction record (15) comprises an associated value of a key usage counter at the time of the signature, to execute the steps of:
receiving an indication (18) of a last recorded value of the key usage counter from a registration device (6),
loading at least one previously signed transaction record (23) from the record buffer (24) responsive to detecting a gap between a present value of the key usage counter and the received last recorded value, and
transmitting the loaded at least one previously signed transaction record (23) to the registration device (6).

13. A computer-readable medium having stored thereon the computer program of claim 12.

14. A use of the method of one of claims 1 to 5 in a distributed electronic recordkeeping system, wherein the registration device (6) is part of an electronic point-of-sale terminal having a user interface for entering transaction data for the generation of new unsigned transaction records (10), wherein the signature device (8) is a remote device and forms part of a remote signature service, to which the registration device (6) is connected via a data network.

## Patentansprüche

1. Verfahren zur sicheren Registrierung einer Folge von Transaktionen mit einem verteilten System (1),
wobei das verteilte System (1) eine Registrierungsvorrichtung (6) und eine Signaturvorrichtung (8) aufweist,
wobei die Registrierungsvorrichtung (6) einen Transaktionsspeicher (16) zum Speichern von signierten Transaktionsdatensätzen (15) aufweist, die von der Signaturvorrichtung (8) signiert wurden,
wobei die Signaturvorrichtung (8) einen Schlüsselnutzungszähler aufweist, der mit jeder von der Signaturvorrichtung (8) erzeugten Signatur inkrementiert wird,
wobei jeder signierte Transaktionsdatensatz (15) einen zugehörigen Wert des Schlüsselnutzungszählers zum Zeitpunkt der Signatur aufweist,
wobei das Verfahren aufweist: Vergleichen eines aktuellen Wertes des Schlüsselnutzungszählers mit einem zuletzt aufgezeichneten Wert, wobei der zuletzt aufgezeichnete Wert der zugehörige Wert eines zuletzt signierten Transaktionsdatensatzes in dem Transaktionsspeicher (16) ist,
Laden mindestens eines zuvor signierten Transaktionsdatensatzes (23) aus einem Datensatzpuffer (24) der Signaturvorrichtung (8) in Reaktion auf das Erfassen einer Lücke zwischen dem aktuellen Wert und dem zuletzt aufgezeichneten Wert, und
Übertragen des geladenen, mindestens einen zuvor signierten Transaktionsdatensatzes (23) an die Registrierungsvorrichtung (6) .

2. Verfahren nach Anspruch 1, **dadurch gekennzeichnet, dass** die Registrierungsvorrichtung (6) eine Angabe (18) des letzten aufgezeichneten Wertes an die Signaturvorrichtung (8) sendet und die Signaturvorrichtung (8) den aktuellen Wert mit der empfangenen Angabe (18) vergleicht.

3. Verfahren nach Anspruch 2, **dadurch gekennzeichnet, dass** die Angabe (18) des letzten aufgezeichneten Wertes ein erwarteter nächster Wert (19) des Schlüsselnutzungszählers ist, der durch Inkrementieren des letzten aufgezeichneten Wertes erhalten wird, wobei die Signaturvorrichtung (8) den erwarteten nächsten Wert (19) mit dem aktuellen Wert vergleicht und eine Lücke durch Auswertung der Gleichheit der verglichenen Werte erkennt.

4. Verfahren nach Anspruch 2 oder 3, **dadurch gekennzeichnet, dass** die Signaturvorrichtung (8) die Bereitstellung einer Signatur eines neuen unsignierten Transaktionsdatensatzes (10) als Reaktion auf die Erkennung einer Lücke zwischen dem aktuellen Wert und dem letzten aufgezeichneten Wert ablehnt.

5. Verfahren nach Anspruch 1, **dadurch gekennzeichnet, dass** die Registrierungsvorrichtung (6) bei Empfang eines neuen signierten Transaktionsdatensatzes (15) von der Signaturvorrichtung (8) den zugehörigen Wert des neuen signierten Transaktionsdatensatzes (15) mit dem inkrementierten letzten aufgezeichneten Wert vergleicht und eine erneute Übertragung mindestens eines zuvor signierten Transaktionsdatensatzes (23) von der Signaturvorrichtung (8) anfordert, wenn eine Lücke zwischen den verglichenen Werten festgestellt wird.

6. Ein verteiltes System (1) zur sicheren Registrierung einer Folge von Transaktionen,
wobei das verteilte System (1) eine Registrierungsvorrichtung (6) und eine Signaturvorrichtung (8) aufweist,
wobei die Registrierungsvorrichtung (6) einen Transaktionsspeicher (16) zum Speichern von signierten Transaktionsdatensätzen (15) aufweist, die von der Signaturvorrichtung (8) signiert wurden,
wobei die Signaturvorrichtung (8) einen Schlüsselnutzungszähler und einen Datensatzpuffer (24) zum Puffern von signierten Transaktionsdatensätzen (15) aufweist,
wobei jeder signierte Transaktionsdatensatz (15) einen zugehörigen Wert des Schlüsselnutzungszählers zum Zeitpunkt der Signatur aufweist,
wobei die Signaturvorrichtung (8) so konfiguriert ist, dass sie mindestens einen zuvor signierten Transaktionsdatensatz (23) aus dem Datensatzpuffer (24) lädt, wenn eine Lücke zwischen einem aktuellen Wert des Schlüsselnutzungszählers und dem zugehörigen Wert eines letzten signierten Transaktionsdatensatzes im Transaktionsspeicher (16) erkannt wird, und dass sie den geladenen mindestens einen zuvor signierten Transaktionsdatensatz (23) an die Registrierungsvorrichtung (6) überträgt.

7. Verteiltes System (1) nach Anspruch 6, **dadurch gekennzeichnet, dass** die Registrierungsvorrichtung (6) so konfiguriert ist, dass sie eine Angabe (18) des zugehörigen Werts eines zuletzt signierten Transaktionsdatensatzes an die Signaturvorrichtung (8) sendet.

8. Verteiltes System nach Anspruch 7, **dadurch gekennzeichnet, dass** die Signaturvorrichtung (8) so konfiguriert ist, dass sie die Bereitstellung einer Signatur eines neuen, nicht signierten Transaktionsdatensatzes (10) in Reaktion auf die Erkennung einer Lücke zwischen dem aktuellen Wert und dem zugehörigen Wert des letzten signierten Transaktionsdatensatzes ablehnt.

9. Verteiltes System nach Anspruch 6, **dadurch gekennzeichnet, dass** die Registrierungsvorrichtung (6) so konfiguriert ist, dass sie bei Empfang eines neuen signierten Transaktionsdatensatzes (15) von der Signaturvorrichtung (8) den zugehörigen Wert des neuen signierten Transaktionsdatensatzes (15) mit dem zugehörigen Wert des letzten signierten Transaktionsdatensatzes vergleicht und als Reaktion auf die Erkennung einer Lücke zwischen den verglichenen Werten eine erneute Übertragung von mindestens einem zuvor signierten Transaktionsdatensatz (23) von der Signaturvorrichtung (8) anfordert.

10. Computerprogramm mit Anweisungen, um eine Registrierungsvorrichtung (6), die einen Transaktionsspeicher (16) zum Speichern signierter Transaktionsdatensätze (15) aufweist, wobei jeder signierte Transaktionsdatensatz (15) einen zugehörigen Wert eines Schlüsselnutzungszählers zum Zeitpunkt der Signatur aufweist, zu veranlassen, die folgenden Schritte auszuführen:
Zugreifen auf den Transaktionsspeicher (16) und Bestimmen des zugehörigen Wertes des letzten signierten Transaktionsdatensatzes in dem Transaktionsspeicher (16) als den zuletzt aufgezeichneten Wert des Schlüsselnutzungszählers,
Senden einer Angabe (18) des zuletzt aufgezeichneten Wertes an eine Signaturvorrichtung (8),
Empfangen mindestens eines zuvor signierten Transaktionsdatensatzes (23) von der Signaturvorrichtung (8), wobei der mindestens eine zuvor signierte Transaktionsdatensatz (23) von der Signaturvorrichtung (8) aus einem Datensatzpuffer geladen wird, der auf das Erfassen einer Lücke zwischen einem aktuellen Wert des Schlüsselnutzungszählers und dem empfangenen zuletzt aufgezeichneten Wert reagiert; und
Speichern des empfangenen mindestens einen zuvor signierten Transaktionsdatensatzes (23) in dem Transaktionsspeicher (16).

11. Ein computerlesbares Medium, auf dem das Computerprogramm nach Anspruch 10 gespeichert ist.

12. Computerprogramm, das Anweisungen aufweist, um eine Signaturvorrichtung (8), die einen Schlüsselnutzungszähler aufweist, wobei der Schlüsselnutzungszähler mit jeder von der Signaturvorrichtung (8) erzeugten Signatur inkrementiert wird, und einen Datensatzpuffer (24) zum Puffern mindestens eines zuvor signierten Transaktionsdatensatzes (23) zu veranlassen, wobei jeder signierte Transaktionsdatensatz (15) einen zugehörigen Wert eines Schlüsselnutzungszählers zum Zeitpunkt der Signatur aufweist, die folgenden Schritte auszuführen:
Empfangen einer Angabe (18) eines zuletzt aufgezeichneten Wertes des Schlüsselnutzungszählers von einer Registrierungsvorrichtung (6),
Laden mindestens eines zuvor signierten Transaktionsdatensatzes (23) aus dem Datensatzpuffer (24) in Reaktion auf das Erfassen einer Lücke zwischen einem aktuellen Wert des Schlüsselnutzungszählers und dem empfangenen zuletzt aufgezeichneten Wert, und
Übertragen des geladenen, mindestens einen zuvor signierten Transaktionsdatensatzes (23) an die Registrierungsvorrichtung (6) .

13. Ein computerlesbares Medium, auf dem das Computerprogramm nach Anspruch 12 gespeichert ist.

14. Verwendung des Verfahrens nach einem der Ansprüche 1 bis 5 in einem verteilten elektronischen Aufzeichnungssystem, wobei die Registrierungsvorrichtung (6) Teil eines elektronischen Kassenterminals ist, das eine Benutzerschnittstelle zur Eingabe von Transaktionsdaten für die Erzeugung neuer unsignierter Transaktionsdatensätze (10) aufweist, wobei die Signaturvorrichtung (8) eine entfernte Vorrichtung ist und Teil eines entfernten Signaturdienstes bildet, mit dem die Registrierungsvorrichtung (6) über ein Datennetz verbunden ist.

## Revendications

1. Procédé d'enregistrement sécurisé d'une séquence de transactions dans un système distribué (1),
dans lequel le système distribué (1) comprend un dispositif d'enregistrement (6) et un dispositif de signature (8),
dans lequel le dispositif d'enregistrement (6) comprend un stockage de transaction (16) pour stocker des documents de transactions signés (15) qui sont signés par le dispositif de signature (8),
dans lequel le dispositif de signature (8) comprend un compteur d'utilisation de clé qui est incrémenté à chaque signature générée par le dispositif de signature (8),
dans lequel chaque document de transaction signé (15) comprend une valeur associée du compteur d'utilisation de clé au moment de la signature,
dans lequel le procédé comprend :
la comparaison d'une valeur actuelle du compteur d'utilisation de clé avec une dernière valeur consignée, laquelle dernière valeur consignée est la valeur associée d'un dernier document de transaction signé dans le stockage de transaction (16),
la charge d'au moins un document de transaction précédemment signé (23) à partir d'un tampon de document (24) du dispositif de signature (8) en réponse à la détection d'un écart entre la valeur actuelle et la dernière valeur consignée, et
la transmission de l'au moins un document de transaction précédemment signé (23) chargé au dispositif d'enregistrement (6).

2. Procédé selon la revendication 1, **caractérisé en ce que** le dispositif d'enregistrement (6) envoie une indication (18) de la dernière valeur consignée au dispositif de signature (8), et le dispositif de signature (8) compare la valeur actuelle avec l'indication (18) reçue.

3. Procédé selon la revendication 2, **caractérisé en ce que** l'indication (18) de la dernière valeur consignée est une valeur suivante attendue (19) du compteur d'utilisation de clé, qui est obtenue par incrémentation de la dernière valeur consignée, dans lequel le dispositif de signature (8) compare la valeur suivante attendue (19) avec la valeur actuelle, et détecte un écart en évaluant l'égalité des valeurs comparées.

4. Procédé selon la revendication 2 ou 3, **caractérisé en ce que** le dispositif de signature (8) rejette la fourniture d'une signature d'un nouveau document de transaction non signé (10) en réponse à la détection d'un écart entre la valeur actuelle et la dernière valeur consignée.

5. Procédé selon la revendication 1, **caractérisé en ce que** le dispositif d'enregistrement (6), à la réception d'un nouveau document de transaction signé (15) du dispositif de signature (8), compare la valeur associée du nouveau document de transaction signé (15) avec la dernière valeur consignée incrémentée et demande une retransmission d'au moins un document de transaction précédemment signé (23) du dispositif de signature (8) en réponse à la détection d'un écart entre les valeurs comparées.

6. Système distribué (1) pour un enregistrement sécurisé d'une séquence de transactions,
dans lequel le système distribué (1) comprend un dispositif d'enregistrement (6) et un dispositif de signature (8),
dans lequel le dispositif d'enregistrement (6) comprend un stockage de transaction (16) pour stocker des documents de transactions signés (15) qui sont signés par le dispositif de signature (8),
dans lequel le dispositif de signature (8) comprend un compteur d'utilisation de clé et un tampon de document (24) pour mettre en mémoire tampon les documents de transactions signés (15),
dans lequel chaque document de transaction signé (15) comprend une valeur associée du compteur d'utilisation de clé au moment de la signature,
dans lequel le dispositif de signature (8) est configuré pour charger au moins un document de transaction précédemment signé (23) à partir du tampon de document (24) en réponse à la détection d'un écart entre une valeur actuelle du compteur d'utilisation de clé et la valeur associée d'un dernier document de transaction signé dans le stockage de transaction (16), et pour transmettre l'au moins un document de transaction précédemment signé chargé (23) au dispositif d'enregistrement (6).

7. Système distribué (1) selon la revendication 6, **caractérisé en ce que** le dispositif d'enregistrement (6) est configuré pour envoyer une indication (18) de la valeur associée d'un dernier document de transaction signé au dispositif de signature (8).

8. Système distribué selon la revendication 7, **caractérisé en ce que** le dispositif de signature (8) est configuré pour rejeter la fourniture d'une signature d'un nouveau document de transaction non signé (10) en réponse à la détection d'un écart entre la valeur actuelle et la valeur associée du dernier document de transaction signé.

9. Système distribué selon la revendication 6, **caractérisé en ce que** le dispositif d'enregistrement (6) est configuré pour, à la réception d'un nouveau document de transaction signé (15) du dispositif de signature (8), comparer la valeur associée du nouveau document de transaction signé (15) dans la valeur associée du dernier document de transaction signé et pour demander une retransmission d'au moins un document de transaction précédemment signé (23) du dispositif de signature (8) en réponse à la détection d'un écart entre les valeurs comparées.

10. Programme informatique comprenant des instructions pour amener un dispositif d'enregistrement (6) comprenant un stockage de transaction (16) pour stocker des documents de transactions signés (15), dans lequel chaque document de transaction signé (15) comprend une valeur associée d'un compteur d'utilisation de clé au moment de la signature, à exécuter les étapes suivantes :
accéder au stockage de transaction (16) et déterminer la valeur associée du dernier document de transaction signé dans le stockage de transaction (16) comme dernière valeur consignée du compteur d'utilisation de clé,
envoyer une indication (18) de ladite dernière valeur consignée à un dispositif de signature (8),
recevoir du dispositif de signature (8) au moins un document de transaction précédemment signé (23), dans lequel l'au moins un document de transaction précédemment signé (23) est chargé par le dispositif de signature (8) à partir d'un tampon d'document en réponse à la détection d'un écart entre une valeur actuelle du compteur d'utilisation de clé et la dernière valeur consignée reçue ; et
stocker l'au moins un document de transaction précédemment signé (23) reçu dans le stockage de transaction (16).

11. Support lisible par ordinateur sur lequel est stocké le programme informatique selon la revendication 10.

12. Programme informatique comprenant des instructions pour amener un dispositif de signature (8) comprenant un compteur d'utilisation de clé, lequel compteur d'utilisation de clé est incrémenté à chaque signature générée par le dispositif de signature (8), et un tampon de document (24) pour mettre en mémoire tampon au moins un document de transaction précédemment signé (23), dans lequel chaque document de transaction signé (15) comprend une valeur associée d'un compteur d'utilisation de clé au moment de la signature, à exécuter les étapes suivantes :
recevoir une indication (18) d'une dernière valeur consignée du compteur d'utilisation de clé d'un dispositif d'enregistrement (6),
charger au moins un document de transaction précédemment signé (23) à partir du tampon de document (24) en réponse à la détection d'un écart entre une valeur actuelle du compteur d'utilisation de clé et la dernière valeur consignée reçue, et
transmettre l'au moins un document de transaction précédemment signé chargé (23) au dispositif d'enregistrement (6).

13. Support lisible par ordinateur sur lequel est stocké le programme informatique selon la revendication 12.

14. Utilisation du procédé selon l'une des revendications 1 à 5 dans un système de comptabilisation électronique distribué, dans laquelle le dispositif d'enregistrement (6) fait partie d'un terminal de point de vente électronique ayant une interface utilisateur pour la saisie de données de transaction pour la génération de nouveaux documents de transaction non signés (10), dans laquelle le dispositif de signature (8) est un dispositif à distance et fait partie d'un service de signature à distance, auquel le dispositif d'enregistrement (6) est connecté via un réseau de données.
